# EUROPEAN PATENT APPLICATION

(11) **EP 3 605 109 A1**
(43) Date of publication of application: **05.02.2020**
(21) Application number: 18770963.9
(22) Date of filing: 22.02.2018
(51) Int. Cl.: G01N 35/08, C12M 1/34, C12Q 1/02, G01N 37/00

(54) **LIQUID HANDLING DEVICE, LIQUID HANDLING METHOD, AND LIQUID HANDLING SYSTEM**

(30) Priority: 24.03.2017 JP 2017059196
(71) Applicant: Enplas Corporation, Kawaguchi-shi, Saitama 332-0034 (JP)
(72) Inventor: SUNAGA, Nobuya, Kawaguchi-shi Saitama 332-0034 (JP)
(74) Representative: Epping - Hermann - Fischer
(86) International application number: PCT/JP2018/006380
(87) International publication number: WO 2018/173611

(57) **Abstract**

This liquid handling device has a first flow passage and a second flow passage. The first flow passage is a flow passage through which first droplets containing a plurality of objects to be sorted can move, and includes a first branching portion. The second flow passage has a droplet dividing portion and a second branching portion. The droplet dividing portion is disposed on the downstream side of the first branching portion, and divides the first droplets containing a prescribed object to be sorted, to generate second droplets containing at most one object to be sorted. The second flow passage is a flow passage through which the second droplets can move. The second droplets can be sorted in the second branching portion. The cross-sectional area of the first flow passage is greater than the cross-sectional area of the second flow passage at an exit of the droplet dividing portion.

## Description

### Technical Field

The present invention relates to a liquid handling device, a liquid handling method and a liquid handling system.

### Background Art

Liquid handling devices for highly accurately analyzing trace analysis target objects such as cells, proteins and nucleic acids in tests such as laboratory tests, food tests, and environment tests are known. For example, a liquid handling device for handling a micro droplet having a diameter of 0.1 to 1,000 µm (hereinafter referred also to as "droplet") generated from liquid containing the above-mentioned analysis target objects is known (e.g., see Non-PTL 1). In the liquid handling device, droplets including predetermined analysis target objects (hereinafter also referred to as "sort target objects") are sorted out from the generated droplets.

### Citation List

### Non-PTL

Non-PTL 1
C. Wyatt Shields IV, et al., Microfluidic cell sorting: a review of the advances in the separation of cells from debulking to rare cell isolation, Lab on a Chip, Vol. 15, pp.1230-1249

### Summary of Invention

### Technical Problem

Typically, droplets are generated from liquid that is diluted such that one droplet includes at most one sort target object. At this time, the number of the sort target objects included in the droplet depends on a probability distribution called Poisson distribution. When droplets are generated from liquid that is diluted such that one droplet includes at most one sort target object in the above-mentioned manner, droplets of approximately 90% can be empty droplets that include no sort target object. In other words, a considerable number of empty droplets are also generated, and consequently the sorting time is lengthened when all of the droplets are sorted.

An object of the present invention is to provide a liquid handling device, a liquid handling method and a liquid handling system for sorting out a droplet including a predetermined sort target object in a short time.

### Solution to Problem

A liquid handling device according to an embodiment of the present invention includes: a first channel configured to allow a first droplet including a plurality of sort target objects to move inside the first channel, the first channel including a first branch; and a second channel disposed downstream of the first branch, the second channel including a droplet dividing part configured to generate a second droplet including at most one sort target object by dividing the first droplet including a predetermined sort target object, and a second branch configured to sort the second droplet generated by the droplet dividing part, the second channel being configured to allow the second droplet to move inside the second channel. A cross-sectional area of the first channel is greater than a cross-sectional area of the second channel at an outlet of the droplet dividing part.

A liquid handling method according to an embodiment of the present invention includes: sorting out a first droplet including a predetermined sort target object from a plurality of first droplets each of which includes a plurality of sort target objects; generating a plurality of second droplets each of which includes at most one sort target object by dividing the first droplet that has been sorted out; and sorting out a second droplet including the predetermined sort target object from the plurality of second droplets.

A liquid handling system according to an embodiment of the present invention includes: a first channel part and a second channel part disposed downstream of the first channel part. The first channel part includes: a first channel configured to allow a first droplet including a plurality of sort target objects to move inside the first channel, the first channel including a first branch; a first detection part configured to detect a predetermined sort target object included in the first droplet; and a first sorting part configured to sort out the first droplet including the predetermined sort target object at the first branch on a basis of a detection result of the first detection part. The second channel part includes: a second channel part including a droplet dividing part configured to generate a second droplet including at most one sort target object by dividing the first droplet sorted by the first sorting part, and a second branch configured to sort out the second droplet generated by the droplet dividing part; a second detection part configured to detect the predetermined sort target object included in the second droplet; and a second sorting part configured to sort out the second droplet including the predetermined sort target object at the second branch on a basis of a detection result of the second detection part. A cross-sectional area of the first channel is greater than a cross-sectional area of the second channel at an outlet of the droplet dividing part.

### Advantageous Effects of Invention

According to the present invention, a droplet including a predetermined sort target object can be sorted out in a short time.

### Brief Description of Drawings

FIGS. 1A and 1B illustrate an example of a configuration of a liquid handling system according to an embodiment;
FIG. 2 is a partially enlarged schematic view illustrating a state where the liquid handling system according to the embodiment is used; and
FIGS. 3A and 3B are graphs illustrating distributions of the number of sort target objects included in droplets in a simulation.

### Description of Embodiments

An embodiment of the present invention is elaborated below with reference to the accompanying drawings.

### Configuration of Liquid Handling System

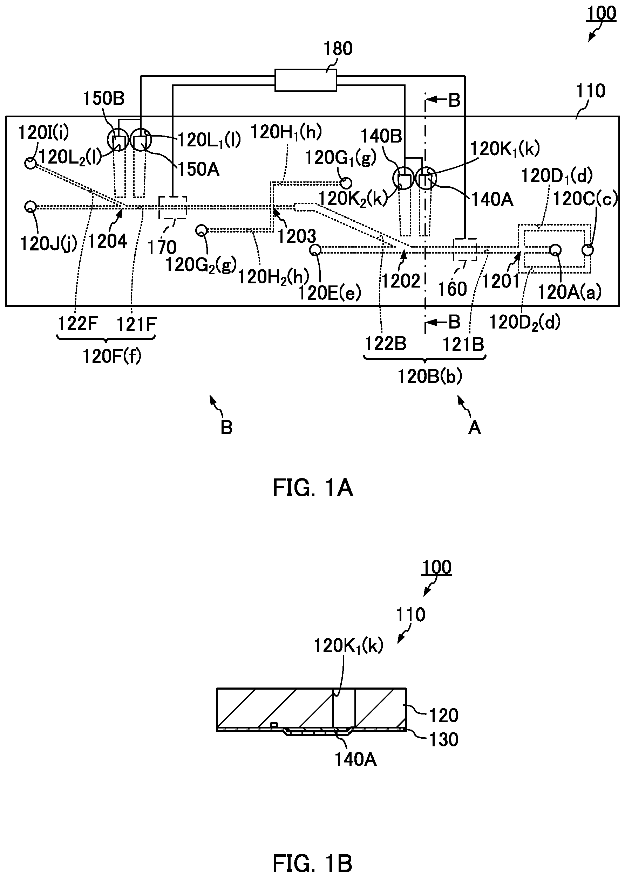

FIGS. 1A and 1B illustrate an example of a configuration of liquid handling system 100 according to the present embodiment. FIG. 1A is a plan view of liquid handling system 100, and FIG. 1B is a sectional view taken along line B-B of FIG. 1A.

Liquid handling system 100 includes liquid handling device 110, first detection part 160, second detection part 170 and control part 180.

### Configuration of Liquid Handling Device

Liquid handling device 110 includes substrate 120, film 130, a pair of first electrodes 140A and 140B, and a pair of second electrodes 150A and 150B. The pair of first electrodes 140A and 140B and the pair of second electrodes 150A and 150B are disposed in a surface of film 130 on the side to which substrate 120 is joined.

In substrate 120, through holes and grooves (recesses) are formed. In the present embodiment, in substrate 120, first through hole 120a, first groove 120b, second through hole 120c, a pair of second grooves 120d₁ and 120d₂, third through hole 120e, third groove 120f, a pair of fourth through holes 120g₁ and 120g₂, a pair of fourth grooves 120h₁ and 120h₂, fifth through hole 120i, sixth through hole 120j, a pair of seventh through holes 120k₁ and 120k₂, and a pair of eighth through holes 1201₁ and 1201₂ are formed. Note that first groove 120b, the pair of second grooves 120d₁ and 120d₂, third groove 120f, and the pair of fourth grooves 120h₁ and 120h₂ are formed in the rear surface of substrate 120.

Film 130 is joined on the rear surface of substrate 120. When one opening of first through hole 120a is closed with film 130, first through hole 120a serves as liquid introduction part 120A. When the opening of first groove 120b is closed with film 130, first groove 120b serves as first channel 120B. When one opening of second through hole 120c is closed with film 130, second through hole 120c serves as first dispersion medium introduction part 120C. When the opening of the pair of second grooves 120d₁ and 120d₂ is closed with film 130, the pair of second grooves 120d₁ and 120d₂ serves as a pair of first dispersion medium channels 120D₁ and 120D₂. When one opening of third through hole 120e is closed with film 130, third through hole 120e serves as first housing part 120E.

When the opening of third groove 120f is closed with film 130, third groove 120f serves as second channel 120F. When one opening of the pair of fourth through holes 120g₁ and 120g₂ is closed with film 130, the pair of fourth through holes 120g₁ and 120g₂ serves as a pair of second dispersion medium introduction parts 120G₁ and 120G₂. When the opening of the pair of fourth grooves 120h₁ and 120h₂ is closed with film 130, the pair of fourth grooves 120h₁ and 120h₂ serves as a pair of second dispersion medium channels 120H₁ and 120H₂ (referred to as "third channel" in the claims). When one opening of fifth through hole 120i is closed with film 130, fifth through hole 120i serves as second housing part 1201. When one opening of sixth through hole 120j is closed with film 130, sixth through hole 120j serves as third housing part 120J.

Note that, in the present embodiment, first channel 120B, the pair of first electrodes 140A and 140B and first detection part 160 constitute first channel part A for handling a first droplet including a plurality of sort target objects. Second channel 120F, the pair of second electrodes 150A and 150B and second detection part 170 constitute second channel part B for handling a second droplet including at most one sort target object. Second channel part B is disposed downstream of first channel part A.

When one opening of the pair of seventh through holes 120k₁ and 120k₂ is closed with film 130, the pair of seventh through holes 120k₁ and 120k₂ serves as a pair of first electrodes recesses 120K₁ and 120K₂. When one opening of the pair of eighth through holes 1201₁ and 1201₂ is closed with film 130, the pair of eighth through holes 1201₁ and 1201₂ serves as a pair of second electrodes recesses 120L₁ and 120L₂.

Liquid introduction part 120A is a recess for housing liquid to be introduced to first channel 120B. The shape and the size of liquid introduction part 120A (first through hole 120a) are not limited as long as liquid can be introduced into liquid introduction part 120A from the outside. Examples of the shape of liquid introduction part 120A include a columnar shape and a truncated cone shape. In the present embodiment, liquid introduction part 120A has a columnar shape.

Liquid introduced from liquid introduction part 120A contains a sort target object such as a cell, a DNA and an enzyme. The dispersion medium of the sort target object in the liquid is not limited as long as the sort target object can be dispersed. Examples of the dispersion medium of the sort target object in the liquid include water, buffer solution, or physiological saline.

First channel 120B is a channel in which the first droplet including a plurality of sort target objects can move. To be more specific, first channel 120B is a channel in which dispersion liquid in which the first droplet is dispersed in the dispersion medium can move. For example, the dispersion liquid can move in first channel 120B with an external force of a pump or the like.

The number of sort target objects included in each first droplet can be appropriately adjusted in accordance with a condition such as the total number of sort target objects, the number of predetermined sort target objects, and the desired sort accuracy. For example, in the case where the sort target object is a cell and the total number of the sort target objects is 7×10⁶, the number of sort target objects included in each first droplet is preferably 10 to 140 from the viewpoint of reducing the influence of cell condensation and autofluorescence.

Note that, in the specification, "predetermined sort target object" means a sort target object that should be separated from the all sort target objects. In the case where the sort target object is a cell, the predetermined sort target object is a specific cell such as a cancer cell, for example.

The cross-sectional area and the cross-sectional shape of first channel 120B (first groove 120b) are not limited as long as the first droplet can appropriately move in first channel 120B. For example, the cross-sectional area and cross-sectional shape of first channel 120B may be appropriately designed in accordance with the concentration of the sort target objects (such as cells) in the liquid containing the sort target objects. For example, in the case where the sort target object is a cell and the concentration thereof is 1×10⁶ to 1×10⁷ cells/mL, the cross-sectional area of first channel 120B is 10,000 to 250,000 µm² (e.g., the width of first channel 120B is 100 to 1,000 µm). In addition, the cross-sectional shape of first channel 120B is a substantially rectangular shape, for example.

In addition, the cross-sectional area (width) of first channel 120B may be appropriately adjusted in accordance with the desired analysis time (the sorting time of the droplets). It is preferable that the width of first channel 120B be large from the viewpoint of shortening the analysis time. For example, when the width of first channel 120B is 750 µm, the analysis time is approximately 0.65 times that of the case where the width of first channel 120B is 650 µm.

The cross-sectional area of first channel 120B may be appropriately adjusted in accordance with the size of the first droplet (the number of the sort target objects included in each first droplet). In addition, the cross-sectional area of first channel 120B is greater than the cross-sectional area of second channel 120F at the outlet of the droplet dividing part described later (in the present embodiment, second joining part 1203). For example, the ratio of the cross-sectional area of first channel 120B to the cross-sectional area of second channel 120F at the outlet of the droplet dividing part is 16 to 34. In the present embodiment, the cross-sectional area of first channel 120B at the outlet of the droplet generation part (in the present embodiment, first joining part 1201) for generating the first droplet is greater than the cross-sectional area of second channel 120F at the outlet of the droplet dividing part (in the present embodiment, second joining part 1203).

Note that, in the specification, "cross-section of the channel" means the cross-section of the channel in a plane orthogonal to the movement direction of the droplet. The "outlet of droplet generation part" means the upstream end (the opening to droplet generation part) of first channel 120B located downstream of joining part 1201 (described later). The "outlet of the droplet dividing part" means the upstream end (the opening to the droplet dividing part) of second channel 120F located downstream of second joining part 1203 (described later).

First channel 120B includes first main channel 121B and first branch channel 122B.

One end (upstream end) of first main channel 121B is connected with liquid introduction part 120A. The other end (downstream end) of first main channel 121B is connected with first housing part 120E. First main channel 121B includes first joining part 1201 and first branch 1202 disposed downstream of first joining part 1201. First main channel 121B is communicated with the pair of first dispersion medium channels 120D₁ and 120D₂ in first joining part 1201. In addition, first main channel 121B is communicated with first branch channel 122B in first branch 1202.

First branch channel 122B is a channel branched off at first branch 1202 from first main channel 121B. In this manner, one end (upstream end) of first branch channel 122B is connected with first main channel 121B in first branch 1202. The other end (downstream end) of first branch channel 122B is connected with one end (upstream end) of second channel 120F.

First dispersion medium introduction part 120C is a recess for housing the dispersion medium of the first droplet that is introduced into the pair of first dispersion medium channels 120D₁ and 120D₂. The shape and the size of first dispersion medium introduction part 120C (second through hole 120c) is not limited as long as the dispersion medium can be introduced to first dispersion medium introduction part 120C from the outside. Examples of the shape of first dispersion medium introduction part 120C include a columnar shape and a truncated cone shape. In the present embodiment, first dispersion medium introduction part 120C has a columnar shape.

The dispersion medium is not limited as long as the first droplet can be held and appropriately dispersed. The dispersion medium is liquid having low solubility with respect to the first droplet, and is oil, for example.

The pair of first dispersion medium channels 120D₁ and 120D₂ is channels in which the dispersion medium of the first droplet can move. For example, the dispersion medium can move inside first dispersion medium channels 120D₁ and 120D₂ by an external force of a pump or the like. One ends (upstream ends) of first dispersion medium channels 120D₁ and 120D₂ are connected with first dispersion medium introduction part 120C. The other ends (downstream ends) of first dispersion medium channels 120D₁ and 120D₂ are connected with first main channel 121B in first joining part 1201. That is, the other ends (downstream ends) of first dispersion medium channels 120D₁ and 120D₂ are open at the side surface of first channel 120B (first main channel 121B). Here, the other ends of first dispersion medium channels 120D₁ and 120D₂ are disposed at respective positions opposite to each other with first main channel 121B therebetween at first joining part 1201. As elaborated later, first main channel 121B and the pair of first dispersion medium channels 120D₁ and 120D₂ function as the first droplet generation part at first joining part 1201.

First housing part 120E is a recess for housing the first droplet including no predetermined sort target object. The shape and the size of first housing part 120E (third through hole 120e) is not limited as long as the first droplet can be housed and may be appropriately designed as necessary. In the present embodiment, first housing part 120E has a columnar shape.

Second channel 120F is a channel disposed downstream of first channel 120B, and a second droplet including at most one sort target object can move inside second channel 120F. To be more specific, second channel 120F is a channel in which dispersion liquid in which second droplets are dispersed in a dispersion medium can move. For example, the dispersion liquid can move inside second channel 120F by an external force of a pump or the like.

The cross-sectional area and the cross-sectional shape of second channel 120F (third groove 120f) are not limited as long as the second droplet can appropriately move inside second channel 120F. For example, the cross-sectional area of second channel 120F is 100 to 1,200 µm² (e.g., the width of second channel 120F is 10 to 60 µm), and the cross-sectional shape of second channel 120F is a substantially rectangular shape. As described above, the cross-sectional area of first channel 120B is greater than the cross-sectional area of second channel 120F at the outlet of the droplet dividing part (in the present embodiment, second joining part 1203). In the present embodiment, the cross-sectional area of first channel 120B at the outlet of the droplet generation part (in the present embodiment, first joining part 1201) is greater than the cross-sectional area of second channel 120F at the outlet of the droplet dividing part (in the present embodiment, second joining part 1203).

Second channel 120F includes second main channel 121F and second branch channel 122F.

One end (upstream end) of second main channel 121F is connected with the downstream end of first branch channel 122B. The other end (downstream end) of second main channel 121F is connected with third housing part 120J. Second main channel 121F includes second joining part 1203 and second branch 1204 disposed downstream of second joining part 1203. Second main channel 121F is communicated with the pair of second dispersion medium channels 120H₁ and 120H₂ at second joining part 1203. In addition, second main channel 121F is communicated with second branch channel 122F at second branch 1204.

Second branch channel 122F is a channel branched off at second branch 1204 from second main channel 121F. In this manner, one end (upstream end) of second branch channel 122F is connected with second main channel 121F at second branch 1204. The other end (downstream end) of second branch channel 122F is communicated with second housing part 1201.

The pair of second dispersion medium introduction parts 120G₁ and 120G₂ is recesses for housing the dispersion medium of the second droplet that is introduced into the pair of second dispersion medium channels 120H₁ and 120H₂. The shapes and the sizes of second dispersion medium introduction parts 120G₁ and 120G₂ (fourth through holes 120g₁ and 120g₂) is not limited as long as the dispersion medium can be introduced to second dispersion medium introduction parts 120G₁ and 120G₂ from the outside. Examples of the shapes of second dispersion medium introduction parts 120G₁ and 120G₂ include a columnar shape and a truncated cone shape. In the present embodiment, each of second dispersion medium introduction parts 120G₁ and 120G₂ has a columnar shape.

The dispersion medium is not limited as long as the second droplet can be held and appropriately dispersed. The dispersion medium is liquid having low solubility with respect to the first droplet, and is, for example, oil. The dispersion medium introduced from first dispersion medium introduction part 120C and the dispersion medium introduced from second dispersion medium introduction parts 120G₁ and 120G₂ may be identical to each other or different from each other. In the present embodiment, the dispersion mediums are identical to each other.

Second dispersion medium channels 120H₁ and 120H₂ are channels in which the dispersion medium of the second droplet can move. For example, the dispersion medium can move inside second dispersion medium channels 120H₁ and 120H₂ by an external force of a pump or the like. One end (upstream end) of second dispersion medium channel 120H₁ is connected with second dispersion medium introduction part 120G₁, and one end (upstream end) of second dispersion medium channel 120H₂ is connected with second dispersion medium introduction part 120G₂. The other ends (downstream ends) of second dispersion medium channels 120H₁ and 120H₂ are connected with second main channel 121F at second joining part 1203 disposed downstream of first branch 1202. That is, the other ends (downstream ends) of second dispersion medium channels 120H₁ and 120H₂ are open at the side surface of second channel 120F (first main channel 121F). Here, the other ends of second dispersion medium channels 120H₁ and 120H₂ are disposed at respective positions opposite to each other with second main channel 121F therebetween at second joining part 1203. As elaborated later, a part of second main channel 121F and the pair of second dispersion medium channels 120G₁ and 120G₂ function as the droplet dividing part (second droplet generation part).

The cross-sectional area of second main channel 121F (second channel 120F) at least at a portion corresponding to the droplet dividing part may be adjusted such that the sort target objects are aligned in a line along the movement direction. In particular, with the configuration in which the cross-sectional area of second channel 120F is appropriately smaller than the cross-sectional area of first channel 120B at the droplet dividing part (second joining part 1203), the sort target objects aligned in a line can be provided to droplets one by one. In this manner, it is possible to set the number of the sort target object included in a generated second droplet to at most one.

It suffices that the droplet dividing part is disposed downstream of first branch 1202. In the present embodiment, the droplet dividing part is disposed at a position corresponding to second joining part 1203 in second channel 120F.

Second housing part 120I is a recess for housing the second droplet including a predetermined sort target object. The shape and the size of second housing part 120I (fifth through hole 120i) are not limited as long as the second droplets can be housed and may be appropriately designed as necessary. In the present embodiment, second housing part 120I has a columnar shape.

Third housing part 120J is a recess for housing the second droplets including no predetermined sort target object. The shape and the size of third housing part 120J (sixth through hole 120j) are not limited as long as the second droplets can be housed and may be appropriately designed as necessary. In the present embodiment, third housing part 120J has a columnar shape.

First electrode recesses 120K₁ and 120K₂ are formed such that an external circuit can be connected from the outside to the pair of first electrodes 140A and 140B exposed to the inside thereof. The shapes and the sizes of first electrode recesses 120K₁ and 120K₂ (seventh through holes 120k₁ and 120k₂) are not limited as long as an external circuit can be connected to first electrodes 140A and 140B from the outside, and may be appropriately designed as necessary. In the present embodiment, each of first electrode recesses 120K₁ and 120K₂ has a columnar shape.

Second electrode recesses 120L₁ and 120L₂ are formed such that an external circuit can be connected from the outside to the pair of second electrodes 150A and 150B exposed to the inside thereof. The shapes and the sizes of second electrode recesses 120L₁ and 120L₂ (eighth through holes 1201₁ and 1201₂) are not limited as long as an external circuit can be connected to second electrodes 150A and 150B from the outside, and may be appropriately designed as necessary. In the present embodiment, each of second electrode recesses 120L₁ and 120L₂ has a columnar shape.

The thickness of substrate 120 is not limited. For example, substrate 120 has a thickness of 1 to 10 mm. The material of substrate 120 is not limited as long as the material has an insulation property, and the material may be appropriately selected from publicly known resins and glass. In the case where first detection part 160 and second detection part 170 perform fluorescence detection, it is preferable that the material of substrate 120 be a material that causes only a small autofluorescence. Examples of the resin of substrate 120 include polyethylene terephthalate, polycarbonate, polymethylmethacrylate, polyvinyl chloride, polypropylene, polyether, polyethylene, polystyrene, silicone resin, and elastomer.

Film 130 is a film made of a resin. The thickness of film 130 is not limited, and may be appropriately set in accordance with the type (rigidity) of the resin. For example, the thickness of film 130 is 30 µm to 200 µm, both inclusive.

The type of the resin of film 130 is not limited as long as the resin has an insulation property, sufficient adhesion to substrate 120, and properties required for the analysis such as heat resistance and reagent resistance. In the case where first detection part 160 and second detection part 170 perform fluorescence detection, it is preferable that the material of film 130 be a material that causes only a small autofluorescence. Examples of the resin of film 130 include polyethylene terephthalate, polycarbonate, polymethylmethacrylate, polyvinyl chloride, polypropylene, polyether, polyethylene, polystyrene, silicone resin and the like.

The pair of first electrodes 140A and 140B is composed of a positive electrode and a negative electrode for applying a voltage to first branch 1202. With this configuration, the pair of first electrodes 140A and 140B can apply a voltage to the first droplet passing through first branch 1202. First electrodes 140A and 140B are disposed apart from each other. As elaborated later, in the present embodiment, the pair of first electrodes 140A and 140B functions as a first sorting part for sorting out the first droplet including a predetermined sort target object.

The shapes and the positions of first electrodes 140A and 140B are not limited as long as the above-mentioned functions are attained. In the present embodiment, in plan view of liquid handling system 100, the end portion of first electrode 140A on first channel 120B side and the end portion of first electrode 140B on first channel 120B side are disposed side by side in the extending direction of first channel 120B (the movement direction of the first droplet inside first channel 120B). At this time, in plan view of liquid handling system 100, the pair of first electrodes 140A and 140B is disposed in one of the two regions sandwiching first channel 120B therebetween. The end-to-end distance of the pair of first electrodes 140A and 140B is not limited as long as a voltage can be applied to first branch 1202. In addition, the distance between first branch 1202 and the end portions of first electrodes 140A and 140B is not limited as long as a voltage can be applied to first branch 1202. In addition, a part of first electrode 140A is exposed to the inside of first electrode recess 120K₁, and a part of first electrode 140B is exposed to the inside of first electrode recess 120K₂.

The pair of second electrodes 150A and 150B is composed of a positive electrode and a negative electrode for applying a voltage to second branch 1204. With this configuration, the pair of second electrodes 150A and 150B can apply a voltage to the second droplet passing through second branch 1204. Second electrodes 150A and 150B are disposed apart from each other. As elaborated later, in the present embodiment, the pair of second electrodes 150A and 150B functions as a second sorting part for sorting out the second droplet including a predetermined sort target object.

The shapes and the positions of second electrodes 150A and 150B are not limited as long as the above-mentioned functions are attained. In the present embodiment, in plan view of liquid handling system 100, the end portion of second electrode 150A on second channel 120F side and the end portion of second electrode 150B on second channel 120F are disposed side by side in the extending direction of second channel 120F (the movement direction of the second droplet inside second channel 120F). At this time, in plan view of liquid handling system 100, the pair of second electrodes 150A and 150B is disposed in one of two regions sandwiching second channel 120F therebetween. The end-to-end distance of the pair of second electrodes 150A and 150B is not limited as long as a voltage can be applied to second branch 1204. In addition, the distance between second branch 1204 and the end portions of second electrodes 150A and 150B is not limited as long as a voltage can be applied to second branch 1204.

First detection part 160 detects a predetermined sort target object included in the first droplet object. The method of detecting the predetermined sort target object is not limited, and may be appropriately selected from publicly known methods in accordance with the type of the predetermined sort target object. For example, the predetermined sort target object may be detected by an optical method such as fluorescence detection, ultraviolet spectroscopy and infrared spectroscopy, or may be detected by an electrical method such as electric resistance measurement. In the case where the predetermined sort target object is detect by fluorescence detection, first detection part 160 may detect the autofluorescence of the predetermined sort target object, or may detect the fluorescence from the fluorescence material labelling the predetermined sort target object.

The configuration of first detection part 160 may be appropriately changed in accordance with the method of detecting the predetermined sort target object. In the case where the predetermined sort target object is detected by the above-mentioned optical method, first detection part 160 includes a light source for irradiating the first droplet with desired light and a light receiving sensor for detecting response light from the first droplet, for example. In the case where the predetermined sort target object is detected by the above-mentioned electrical method, first detection part 160 includes a power source and an ammeter, for example.

Second detection part 170 detects a predetermined sort target object included in the second droplet. Examples of the method of detecting the predetermined sort target object by second detection part 170 are identical to the examples of the method of detecting the predetermined sort target object by first detection part 160. In addition, the examples of the configuration of second detection part 170 are identical to the examples of the configuration of first detection part 160.

Control part 180 controls the operation of the first sorting part on the basis of the detection result of first detection part 160, and controls the operation of the second sorting part on the basis of the detection result of second detection part 170. In the present embodiment, control part 180 controls the value of the voltage to be applied between the pair of first electrodes 140A and 140B, and the value of the voltage to be applied between the pair of second electrodes 150A and 150B. Control part 180 is composed of a publicly known computer, microcomputer, or the like including a control device, an input device and an output device.

Next, a method of manufacturing liquid handling device 110 according to the present embodiment is described. First, substrate 120 and film 130 are prepared. The method of forming through holes and grooves in substrate 120 is not limited. Examples of the method of forming through holes and grooves in substrate 120 include a metal molding method and a lithography method. Next, the pair of first electrodes 140A and 140B and the pair of second electrodes 150A and 150B are formed on film 130. The method of forming the electrodes on film 130 is not limited. Examples of the method of forming the electrodes on film 130 include a vacuum deposition method and a sputtering method. In addition, the electrodes may be formed by injecting and solidifying a conductive ink in a recess formed in film 130. Finally, substrate 120 and film 130 are joined to each other. The method of joining film 130 and substrate 120 is not limited. For example, film 130 may be joined to substrate 120 by thermal welding, laser welding, an adhesive agent or the like. Liquid handling device 110 according to the present embodiment may be manufactured through the above-mentioned procedure.

### Method of Handling Liquid

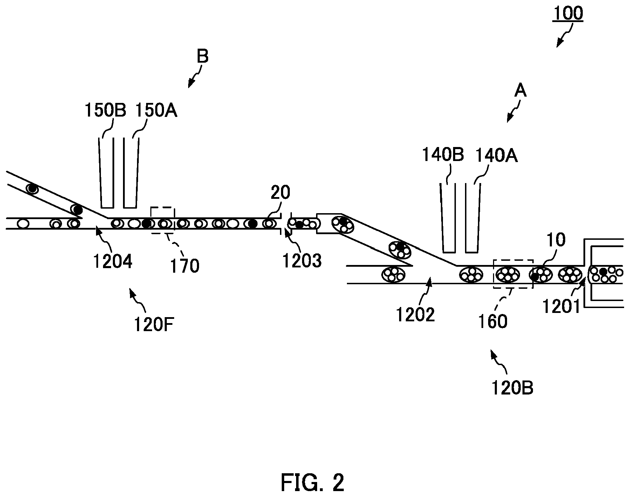

Next, how to use liquid handling system 100 according to the present embodiment (a method of handling liquid according to the present embodiment) is described. FIG. 2 is a partially enlarged schematic view illustrating a state where liquid handling system 100 according to the present embodiment is used. In FIG. 2, the black circles represent predetermined sort target objects, and the white circles represent sort target objects other than the predetermined sort target objects.

The method of handling liquid according to the present embodiment includes a step of sorting out first droplet 10, a step of generating second droplet 20 and a step of sorting out second droplet 20.

### 1) Sorting out of First Droplet

First, a plurality of first droplets 10 each including a plurality of sort target objects are prepared. First droplets 10 may be generated in advance, or may be generated in liquid handling device 110. From the viewpoint of reducing damages to sort target objects, it is preferable to generate first droplet 10 in liquid handling device 110 as in the present embodiment. To be more specific, liquid containing sort target objects is injected into liquid introduction part 120A and dispersion medium for first droplet 10 is injected into first dispersion medium introduction part 120C. In this manner, from liquid introduction part 120A, the above-mentioned liquid moves inside first channel 120B (first main channel 121B), and the dispersion medium moves inside first dispersion medium channels 120D₁ and 120D₂. Next, the above-mentioned liquid and dispersion medium join together at first joining part 1201. In this manner, the above-mentioned liquid is divided by the dispersion medium that flows into first main channel 121B from the both sides of first main channel 121B. As a result, first droplet 10 is generated. At this time, the number of the sort target objects included in first droplet 10 can be adjusted by the concentration and the flow rate of the liquid, and the flow rate of the dispersion medium.

First droplet 10 thus generated moves in first main channel 121B and reaches first branch 1202. At this time, first detection part 160 disposed between first joining part 1201 and first branch 1202 detects whether each first droplet 10 includes a predetermined sort target object. The detection result of first detection part 160 is transmitted to control part 180.

Next, on the basis of the detection result of first detection part 160, first droplet 10 including a predetermined sort target object is sorted out from a plurality of first droplets 10. To be more specific, first droplet 10 is sorted out by changing the destination of first droplet 10 moving inside first channel 120b at first branch 1202. In the present embodiment, at a timing when first droplet 10 including a predetermined sort target object that should be sorted out reaches first branch 1202, control part 180 applies a voltage to first branch 1202 by the pair of first electrodes 140A and 140B. In this manner, an electric field can be formed at first branch 1202 and a voltage can be applied to first droplet 10. The closer to the pair of first electrodes 140A and 140B, the greater the intensity of the electric field formed at first branch 1202; the farther from the pair of first electrodes 140A and 140B, the weaker the intensity of the electric field formed at first branch 1202. In the present embodiment, the movement direction of first droplet 10 moving in first branch 1202 that includes a predetermined sort target object is changed from the weak electric field side to the strong electric field side. As a result, the destination of first droplet 10 including a predetermined sort target object is set to first branch channel 122B whereas the destination of first droplet 10 including no predetermined sort target object is not changed. First droplet 10 including no predetermined sort target object reaches first housing part 120E and is housed in first housing part 120E. Thus, first droplet 10 including a predetermined sort target object is separated from first droplet 10 including no predetermined sort target object.

### 2) Generation of Second Droplet

Next, first droplet 10 having been sorted out is divided to generate a second droplet including at most one sort target object 20. To be more specific, dispersion medium is injected from second dispersion medium introduction parts 120G₁ and 120G₂. First droplet 10 having been sorted out in the sorting of first droplet 10 moves from first channel 120B to second channel 120F having a cross-sectional area smaller than that of first channel 120B. At this time, the shape of first droplet 10 is deformed into a slender shape in accordance with the cross-sectional area of second channel 120F. With this configuration, the sort target objects included in first droplet 10 are aligned in a line along the movement direction of first droplet 10. At second joining part 1203, the deformed first droplet is divided by the dispersion medium flowing into second main channel 121F from both sides of second main channel 121F. As a result, second droplet 20 is generated. At this time, the number of the sort target objects included in second droplet 20 is set to one or less since the cross-sectional area of second channel 120F at the outlet of the droplet dividing part (second joining part 1203) is appropriately smaller than the cross-sectional area of first channel 120B. The flow rate of the dispersion medium may be appropriately adjusted such that the number of the sort target objects included in second droplet 20 is set to one or less. In other words, the number of the sort target objects included in second droplet 20 is 0 or 1.

Generated second droplet 20 moves in second main channel 121F and reaches second branch 1204. At this time, second detection part 170 disposed between second joining part 1203 and second branch 1204 detects whether each second droplet 20 includes a predetermined sort target object. The detection result of second detection part 170 is transmitted to control part 180.

### 3) Sorting out of Second Droplet

Next, on the basis of the detection result of the second detection part, second droplet 20 including the predetermined sort target object is sorted out from a plurality of second droplets 20. To be more specific, second droplet 20 is sorted out by changing the destination of second droplet 20 moving inside second channel 120F at second branch 1204. In the present embodiment, control part 180 applies a voltage to second branch 1204 by the pair of second electrodes 150A and 150B at a timing when second droplet 20 including the predetermined sort target object that should be sorted out reaches second branch 1204. In this manner, second droplet 20 can be sorted out in the same manner as the sorting of first droplet 10. Note that since the size of second droplet 20 is smaller than the size of first droplet 10, the voltage applied to second branch 1204 may be smaller than the voltage applied to first branch 1202.

As a result of the voltage application to second branch 1204, the destination of second droplet 20 including the predetermined sort target object is set to second branch channel 122F whereas the destination of the second droplet including no predetermined sort target object 20 is not changed. Second droplet 20 including the predetermined sort target component reaches second housing part 120I, and thus the second droplet 20 is collected. The second droplet including no predetermined sort target object 20 reaches third housing part 120J, and thus the second droplet 20 is collected. In this manner, second droplet 20 including the predetermined sort target object is separated from the second droplets including no predetermined sort target object 20.

As described above, liquid handling system 100 according to the present embodiment sorts out first droplet 10 including a predetermined sort target object from first droplets including a plurality of sort target objects 10, and, after generating a plurality of second droplets 20 each including at most one sort target object from the sorted first droplets 10, second droplet 20 including the predetermined sort target object is sorted out from the plurality of second droplets 20. Thus, liquid handling system 100 according to the present embodiment can separate out the second droplets including the predetermined sort target object in a short time by sorting the droplets in the stepwise manner.

### Simulation

A simulation was conducted for the purpose of comparing the time required for sorting droplets by one step with the time required for sorting droplets by two steps. In this simulation, the sort target object was 7×10⁶ cells, the sorting frequency was set to 200 Hz, the width of first channel 120B was set to 650 µm, the depth of first channel 120B was set to 30 µm, the width of second channel 120F was set to 30 µm, and the depth of second channel 120F was set to 30 µm.

First, a simulation result of the case where droplets are sorted by one step is described. In the present simulation, each droplet includes at most one cell, and the liquid handling device does not include first channel 120B but includes only second channel 120F. The number of generated droplets was 7.79×10⁷, and the sorting time of the droplets was approximately 120 hours.

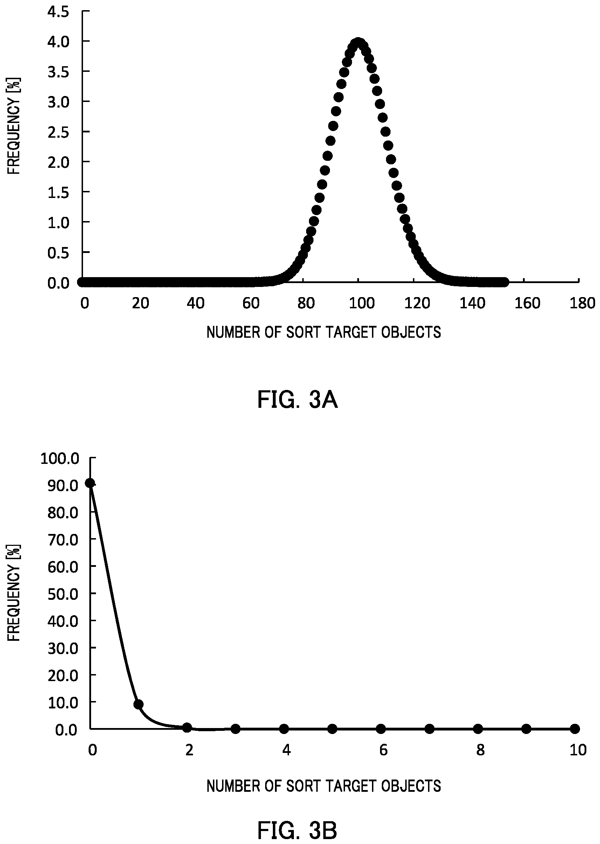

Next, a simulation result of the case where droplets are sorted by two steps is described. FIGS. 3A and 3B are graphs illustrating distributions of the number of sort target objects included in droplets in the present simulation. FIG. 3A is a graph illustrating a distribution of the number of sort target objects included in first droplets, and FIG. 3B is a graph illustrating a distribution of the number of sort target objects included in second droplets. As illustrated in FIG. 3A and FIG. 3B, the number of the cells included in the first and second droplets depend on Poisson distribution.

In this simulation, as illustrated in FIG. 3A, the number of the sort target objects included in the first droplets was approximately 100. The number of generated first droplets was 6.95×10⁵, and the sorting time for the first droplets was 58 minutes. In addition, as illustrated in FIG. 3B, the number of the sort target objects included in the second droplet was at most one. The number of the generated second droplets was 1.56×10⁵, and the sorting time for the second droplets was 13 minutes. Accordingly, in the case where droplets are sorted by two steps, the sum of the sorting time for the first droplets and the sorting time for the second droplets was approximately one hour.

The results of the present simulation show that the sorting time for the droplets can be shortened by sorting droplets in the stepwise manner in comparison with the case where droplets are sorted by one step. This simulation showed that the sorting time can be shortened from approximately 120 hours to approximately one hour.

### Effect

Liquid handling system 100 according to the present embodiment sorts out a first droplet including a predetermined sort target object from first droplets including a plurality of sort target objects, and, after generating second droplets each including at most one sort target object from the sorted first droplets, sorts out second droplets each including a predetermined sort target object from the second droplets. By sorting out the droplets in this stepwise manner, droplets each including at most one predetermined sort target object can be sorted (separated) out in a shorter time in comparison with the case where droplets each including at most one sort target object are sorted out by one step.

In addition, liquid handling system 100 according to the present embodiment can perform sorting of the first droplet, generation of the second droplet, and sorting of the second droplet in one liquid handling device 110, and thus does not require transportation of sort target objects. As a result, damages to sort target objects during transportation of the sort target objects can be suppressed.

While droplets are sorted by two steps in the present embodiment, the liquid handling method according to the embodiment of the present invention may sort out the droplet by three or more steps.

While a voltage is applied to the branch by a pair of electrodes in the present embodiment to sort the droplets, the present invention is not limited to this configuration. For example, droplets may be physically sorted by means of a cantilever disposed at the branch, or by means of electro-osmosis using a direct current, or, by means of an optical tweezer.

While liquid handling device 110 including first electrodes 140A and 140B and second electrodes 150A and 150B is described as the sorting part for sorting droplets in the present embodiment, the liquid handling device according to the embodiment of the present invention may not be provided with the sorting part. In this case, the droplets may be sorted by a sorting part disposed outside the liquid handling device.

While the liquid handling method uses liquid handling device 110 including a channel in the present embodiment, the liquid handling method according to the embodiment of the present invention is not limited to this configuration, and the liquid handling method according to the embodiment of the present invention may be applied to a flow cytometry provided with no channel, for example.

While the droplet dividing part is disposed in second channel 120F in the present embodiment, the droplet dividing part may be disposed in a channel separately disposed between first channel 120B and second channel 120F, for example.

This application is entitled to and claims the benefit of Japanese Patent Application No. 2017-059196 filed on March 24, 2017, the disclosure each of which including the specification, drawings and abstract is incorporated herein by reference in its entirety.

### Industrial Applicability

The liquid handling device of the embodiment of the present invention is useful as a microchannel chip for use in separation of specific cells.

### Reference Signs List

A First channel part
B Second channel part
10 First droplet
20 Second droplet
100 Liquid handling system
110 Liquid handling device
120 Substrate
120a First through hole
120A Liquid introduction part
120b First groove
120B First channel
121B First main channel
122B First branch channel
120c Second through hole
120C First dispersion medium introduction part
120di, 120d₂ Second groove
120Di, 120D₂ First dispersion medium channel
120e Third through hole
120E First housing part
120f Third groove
120F Second channel
121F Second main channel
122F Second branch channel
120gi, 120g₂ Fourth through hole
120G₁, 120G₂ Second dispersion medium introduction part
120hi, 120h₂ Fourth groove
120H₁, 120H₂ Second dispersion medium channel
120i Fifth through hole
120I Second housing part
120j Sixth through hole
120J Third housing part
120ki, 120k₂ Seventh through hole
120K₁, 120K₂ First electrode recess
1201₁, 1201₂ Eighth through hole
120L₁, 120L₂ Second electrode recess
1201 First joining part
1202 First branch
1203 Second joining part
1204 Second branch
130 Film
140A, 140B First electrode
150A, 150B Second electrode
160 First detection part
170 Second detection part
180 Control part

## Claims

1. A liquid handling device, comprising:
a first channel configured to allow a first droplet including a plurality of sort target objects to move inside the first channel, the first channel including a first branch; and
a second channel disposed downstream of the first branch, the second channel including a droplet dividing part configured to generate a second droplet including at most one sort target object by dividing the first droplet including a predetermined sort target object, and a second branch configured to sort the second droplet generated by the droplet dividing part, the second channel being configured to allow the second droplet to move inside the second channel, wherein
a cross-sectional area of the first channel is greater than a cross-sectional area of the second channel at an outlet of the droplet dividing part.

2. The liquid handling device according to claim 1, wherein a ratio of the cross-sectional area of the first channel to the cross-sectional area of the second channel at the outlet of the droplet dividing part is 16 to 34.

3. The liquid handling device according to claim 1 or 2, further comprising:
a pair of first electrodes configured to apply a voltage to the first branch; and
a pair of second electrodes configured to apply a voltage to the second branch.

4. The liquid handling device according to any one of claims 1 to 3, wherein the droplet dividing part is a joining part where a third channel that opens at a side surface of the second channel and the second channel join together.

5. The liquid handling device according to any one of claims 1 to 4,
wherein the first channel further includes a droplet generation part configured to generate the first droplet; and
wherein a cross-sectional area of the first channel at an outlet of the droplet generation part is greater than the cross-sectional area of the second channel at the outlet of the droplet dividing part.

6. A liquid handling method, comprising:
sorting out a first droplet including a predetermined sort target object from a plurality of first droplets each of which includes a plurality of sort target objects;
generating a plurality of second droplets each of which includes at most one sort target object by dividing the first droplet that has been sorted out; and
sorting out a second droplet including the predetermined sort target object from the plurality of second droplets.

7. The liquid handling method according to claim 6, wherein a number of the sort target objects included in the first droplet is 10 to 140.

8. The liquid handling method according to claim 6 or 7,
wherein, in the sorting out of the first droplet, the first droplet is sorted out by changing, at a first branch, a destination of the first droplet moving inside a first channel, the first channel including the first branch;
wherein, in the sorting out of the second droplet, the second droplet is sorted out by changing, at a second branch, a destination of the second droplet moving inside a second channel disposed downstream of the first channel, the second channel including the second branch; and
wherein a cross-sectional area of the first channel is greater than a cross-sectional area of the second channel at an outlet of a droplet dividing part configured to divide the first droplet.

9. The liquid handling method according to claim 8, wherein a ratio of the cross-sectional area of the first channel to the cross-sectional area of the second channel at the outlet of the droplet dividing part is 16 to 34.

10. The liquid handling method according to any one of claims 6 to 9,
wherein in the sorting out of the first droplet, the first droplet is sorted out by applying a voltage to the first droplet; and
wherein in the sorting out of the second droplet, the second droplet is sorted out by applying a voltage to the second droplet.

11. The liquid handling method according to any one of claims 6 to 10, wherein the sort target object is a cell.

12. A liquid handling system, comprising:
a first channel part and a second channel part disposed downstream of the first channel part,
wherein the first channel part includes:
a first channel configured to allow a first droplet including a plurality of sort target objects to move inside the first channel, the first channel including a first branch;
a first detection part configured to detect a predetermined sort target object included in the first droplet; and
a first sorting part configured to sort out the first droplet including the predetermined sort target object at the first branch on a basis of a detection result of the first detection part,
wherein the second channel part includes:
a second channel part including a droplet dividing part configured to generate a second droplet including at most one sort target object by dividing the first droplet sorted by the first sorting part, and a second branch configured to sort out the second droplet generated by the droplet dividing part;
a second detection part configured to detect the predetermined sort target object included in the second droplet; and
a second sorting part configured to sort out the second droplet including the predetermined sort target object at the second branch on a basis of a detection result of the second detection part, and
wherein a cross-sectional area of the first channel is greater than a cross-sectional area of the second channel at an outlet of the droplet dividing part.

13. The liquid handling system according to claim 12,
wherein the first sorting part includes a pair of first electrodes configured to apply a voltage to the first branch; and
wherein the second sorting part includes a pair of second electrodes configured to apply a voltage to the second branch.

14. The liquid handling system according to claim 12 or 13, wherein a ratio of the cross-sectional area of the first channel to the cross-sectional area of the second channel at the outlet of the droplet dividing part is 16 to 34.

15. The liquid handling system according to any one of claims 12 to 14, wherein the droplet dividing part is a joining part where a third channel that opens at a side surface of the second channel and the second channel join together.

16. The liquid handling system according to any one of claims 12 to 15,
wherein the first channel includes a droplet generation part configured to generate the first droplet; and
wherein a cross-sectional area of the first channel at an outlet of the droplet generation part is greater than the cross-sectional area of the second channel at the outlet of the droplet dividing part.
